# EUROPÄISCHE PATENTANMELDUNG

(11) **EP 2 161 825 A1**
(43) Veröffentlichungstag der Anmeldung: **10.03.2010**
(21) Anmeldenummer: 08163678.9
(22) Anmeldetag: 04.09.2008
(51) Int. Cl.: H02M 7/483

(54) **Schaltzelle zur Schaltung von fünf oder mehr Spannungsniveaus**

(71) Anmelder: ABB Research Ltd., 8050 Zürich (CH)
(72) Erfinder: Haederli, Christoph, 8047 Zürich (CH)
(74) Vertreter: ABB Patent Attorneys

(57) **Zusammenfassung**

Es wird eine Schaltzelle zur Schaltung von n Schaltspannungsniveaus, wobei n=5,7,9,... ist, angegeben, welche eine erste und eine zweite Zweigschaltung (1,2) aufweist, wobei jede Zweigschaltung (1,2)n-1 in Serie geschaltete Leistungshalbleiterschalter und p=n-2 Leistungshalbleiterschalterverbindungspunkten der in Serie geschalteten Leistungshalbleiterschalter einer jeden Zweigschaltung (1,2) aufweist, die eine erste und eine zweite Kapazität (6,7) oder alternativ nur eine Kapazität (8) aufweist. Zudem enthält die Zwischenschaltung eine Vielzahl von Leistungshalbleiterschaltern, die zusammen mit der ersten und zweiten Kapazität (6,7) oder der einen Kapazität (8) zwischen dem Verbindungspunkt zweie Energiespeicher (3,4) und den beiden Zweigschaltungen (1,2) angeordnet ist.

## Beschreibung

### Technisches Gebiet

Die Erfindung bezieht sich auf das Gebiet der leistungselektronischen Schaltungen. Sie geht aus von einer Schaltzelle zur Schaltung von fünf oder mehr Spannungsniveaus gemäss dem Oberbegriff der unabhängigen Ansprüche.

### Stand der Technik

Leistungshalbleiterschalter werden derzeit vermehrt in der Umrichtertechnik und insbesondere in Umrichterschaltungen zur Schaltung einer Vielzahl von Spannungsniveaus eingesetzt. Eine Schaltzelle einer derartigen Umrichterschaltung ist in Fig. 2 der WO 2007/087732 A1 angegeben. Die Schaltzelle umfasst darin eine erste und eine zweite Zweigschaltung, wobei jede Zweigschaltung zwei in Serie geschaltete ansteuerbare bidirektionale Leistungshalbleiterschalter mit gesteuerter unidirektionaler Stromführungsrichtung aufweist. Erste Enden der beiden Zweigschaltungen sind miteinander verbunden, wobei die Verbindung einen Wechselspannungsphasenanschluss bildet. Zudem sind zweite Enden der beiden Zweischaltungen über eine Serienschaltung zweier Energiespeicher miteinander verbunden. Weiterhin umfasst die Schaltzelle eine Zwischenschaltung, welche eine Leistungshalbleiterschalteranordnung und eine Kapazität aufweist, wobei die Leistungshalleiterschalteranordnung mit dem Verbindungspunkt der in Serie geschalteten zwei Energiespeicher verbunden ist. Ferner sind die Kapazität der Zwischenschaltung und die Leistungshalbleiterschalteranordnung mit den Verbindungspunkten der ansteuerbaren bidirektionalen Leistungshalbleiterschalter der beiden Zweigschaltungen verbunden.

Mit der vorstehend genannten Schaltzelle der WO 2007/087732 A1 ist es lediglich möglich, fünf Schaltspannungsniveaus zu schalten. Zudem sind die Verbindungen der Schaltzelle und damit deren Aufbau kompliziert, so dass eine Realisierung der Schaltzelle nach der WO 2007/087732 A1 aufwendig ist.

### Darstellung der Erfindung

Aufgabe der Erfindung ist es deshalb, eine Schaltzelle anzugeben, mittels welcher fünf oder mehr Spannungsniveaus geschalten werden können, welche einfach realisiert werden kann und zudem eine alternative Lösung zum Stand der Technik, insbesondere zu der WO 2007/087732 A1, darstellt. Diese Aufgabe wird durch die Merkmale des Anspruchs 1 bzw. des Anspruchs 2 gelöst. In den abhängigen Ansprüchen sind vorteilhafte Weiterbildungen der Erfindung angegeben.

Die erfindungsgemässe Schaltzelle zur Schaltung von n Schaltspannungsniveaus, wobei n=5, 7, 9,... ist, umfasst eine erste und eine zweite Zweigschaltung, wobei jede Zweigschaltung n-1 in Serie geschaltete ansteuerbare bidirektionale Leistungshalbleiterschalter mit gesteuerter unidirektionaler Stromführungsrichtung aufweist, erste Enden der Zweigschaltungen miteinander verbunden sind und zweite Enden der Zweigschaltungen über eine Serienschaltung eines ersten und eines zweiten Energiespeicher miteinander verbunden sind. Weiterhin sind p=n-2 Leistungshalbleiterschalterverbindungspunkte der in Serie geschalteten ansteuerbaren bidirektionalen Leistungshalbleiterschalter mit gesteuerter unidirektionaler Stromführungsrichtung einer jeden Zweigschaltung vorgesehen, wobei für jede Zweigschaltung die Leistungshalbleiterschalterverbindungspunkte beginnend mit einer ungeraden Zählzahl x vom ersten Ende bis zum zweiten Ende der jeweiligen Zweigschaltung gezählt sind. Ferner ist eine Zwischenschaltung vorgesehen, welche mit dem Verbindungspunkt des ersten mit dem zweiten Energiespeicher verbunden ist und welche eine Vielzahl an Leistungshalbleiterschalter aufweist. Erfindungsgemäss weist die Zwischenschaltung eine erste und eine zweite Kapazität auf, wobei die erste Kapazität mit einem Leistungshalbleiterschalterverbindungspunkt mit ungerader Zählzahl x der ersten Zweigschaltung verbunden ist und die zweite Kapazität mit einem Leistungshalbleiterschalterverbindungspunkt der zweiten Zweigschaltung verbunden ist. Zudem ist ein Leistungshalbleiterschalter der Zwischenschaltung mit einem Leistungshalbleiterschalterverbindungspunkt mit Zählzahl x < (p+1)/2 der ersten oder zweiten Zweigschaltung oder mit dem ersten Ende verbunden.

Als Alternative dazu ist der Leistungshalbleiterschalter der Zwischenschaltung erfindungsgemäss nur mit einem Leistungshalbleiterschalterverbindungspunkt mit Zählzahl x = (p+1)/2 der ersten Zweigschaltung oder nur mit einem Leistungshalbleiterschalterverbindungspunkt mit Zählzahl x = (p+1)/2 der zweiten Zweigschaltung verbunden.

In einer weiteren Alternative weist die Zwischenschaltung erfindungsgemäss eine Kapazität auf, wobei die Kapazität mit einem Leistungshalbleiterschalterverbindungspunkt mit Zählzahl x < (p+1)/2 der ersten und zweiten Zweigschaltung verbunden ist. Ferner ist alternativ ein Leistungshalbleiterschalter der Zwischenschaltung mit einem Leistungshalbleiterschalterverbindungspunkt mit Zählzahl x < (p+1)/2 der ersten oder zweiten Zweigschaltung verbunden und ein weiterer Leistungshalbleiterschalter der Zwischenschaltung ist mit einem Leistungshalbleiterschalterverbindungspunkt mit Zählzahl x ≤ (p+1)/2 der ersten oder zweiten Zweigschaltung verbunden, wobei der weitere Leistungshalbleiterschalter der Zwischenschaltung dann nicht unmittelbar mit der Kapazität der Zwischenschaltung verbunden ist. Damit ist eine Schaltzelle zur Schaltung von n Schaltspannungsniveaus, wobei n=5, 7, 9,... ist, mit besonders wenigen Bauelementen und diesbezüglichen Verbindungen und somit eine insgesamt besonders einfache Schaltzelle realisiert, welche zudem einen geringen Platzbedarf aufweist und darüber hinaus eine alternative Lösung zum Stand der Technik darstellt. Durch den geringen Schaltungsaufwand ist die erfindungsgemässe Schaltzelle auch sehr robust, wenig störanfällig und zeichnet sich damit durch eine hohe Verfügbarkeit aus. Aufgrund des geringen Schaltungsaufwandes kann der Ansteueraufwand bezüglich der schaltenden Elemente zudem ebenfalls gering gehalten werden. Ein weiterer Vorteil der erfindungsgemässen Schaltzelle ist, dass sich der Strom am dem Verbindungspunkt des ersten mit dem zweiten Energiespeicher mittels der Zwischenschaltung in bidirektionaler Richtung einstellen beziehungsweise regeln lässt. Die vorstehend genannte erfindungsgemässe alternative Schaltzelle kommt zudem mit lediglich einer Kapazität aus.

Diese und weitere Aufgaben, Vorteile und Merkmale der vorliegenden Erfindung werden aus der nachfolgenden detaillierten Beschreibung bevorzugter Ausführungsformen der Erfindung in Verbindung mit der Zeichnung offensichtlich.

### Kurze Beschreibung der Zeichnungen

Es zeigen:
- Fig. 1: eine erste Ausführungsform einer erfindungsgemässen Schaltzelle,
- Fig. 2: eine zweite Ausführungsform der erfindungsgemässen Schaltzelle,
- Fig. 3: eine dritte Ausführungsform der erfindungsgemässen Schaltzelle,
- Fig. 4: eine vierte Ausführungsform der erfindungsgemässen Schaltzelle,
- Fig. 5: eine fünfte Ausführungsform der erfindungsgemässen Schaltzelle,
- Fig. 6: eine sechste Ausführungsform der erfindungsgemässen Schaltzelle,
- Fig. 7: eine siebte Ausführungsform der erfindungsgemässen Schaltzelle,
- Fig. 8: eine achte Ausführungsform der erfindungsgemässen Schaltzelle,
- Fig. 9: eine neunte Ausführungsform der erfindungsgemässen Schaltzelle und
- Fig. 10: eine zehnte Ausführungsform der erfindungsgemässen Schaltzelle.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

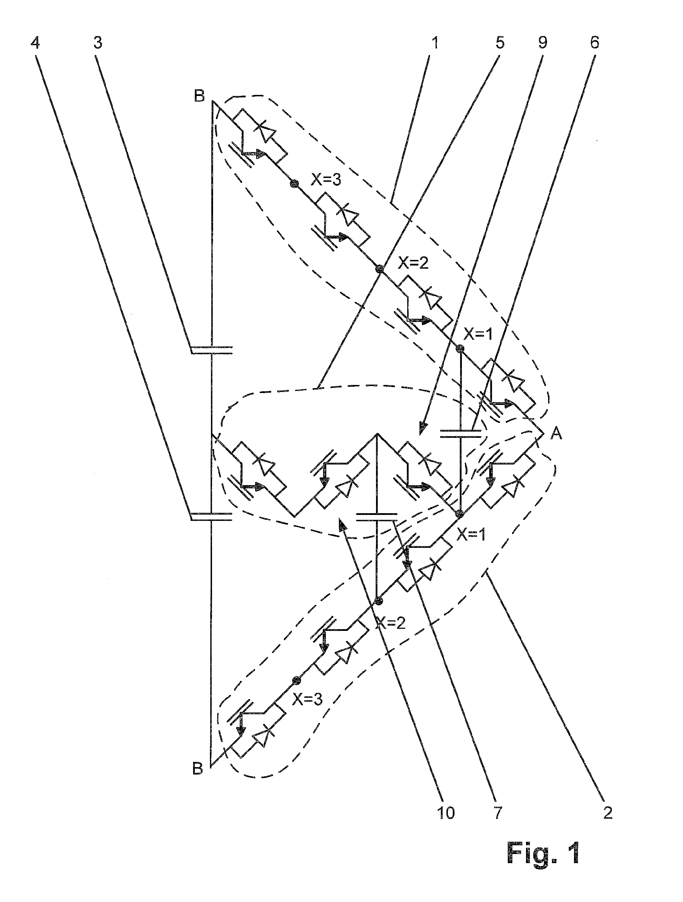

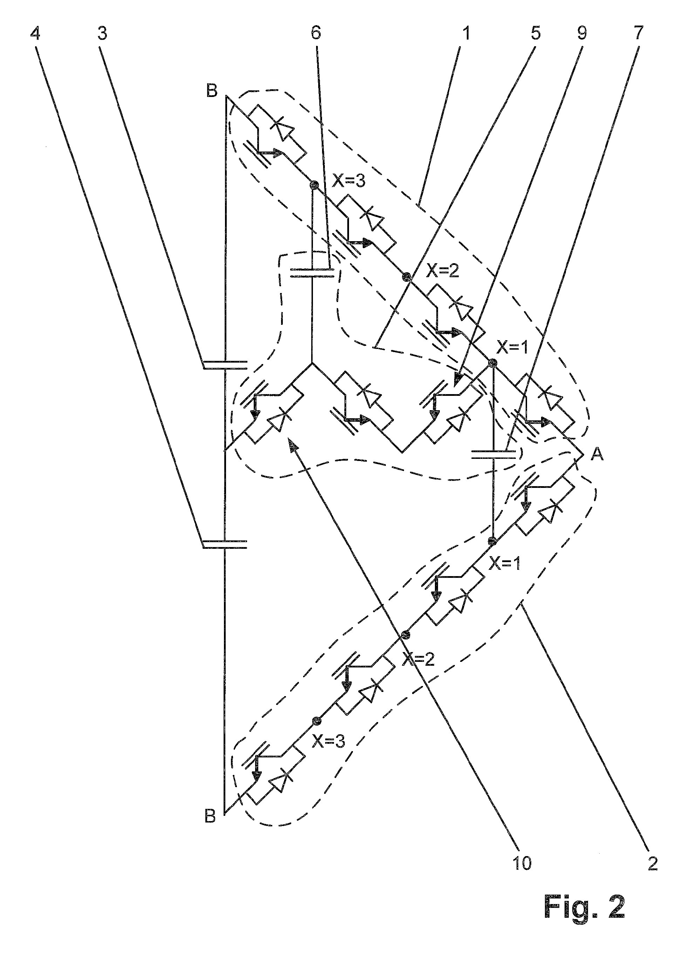

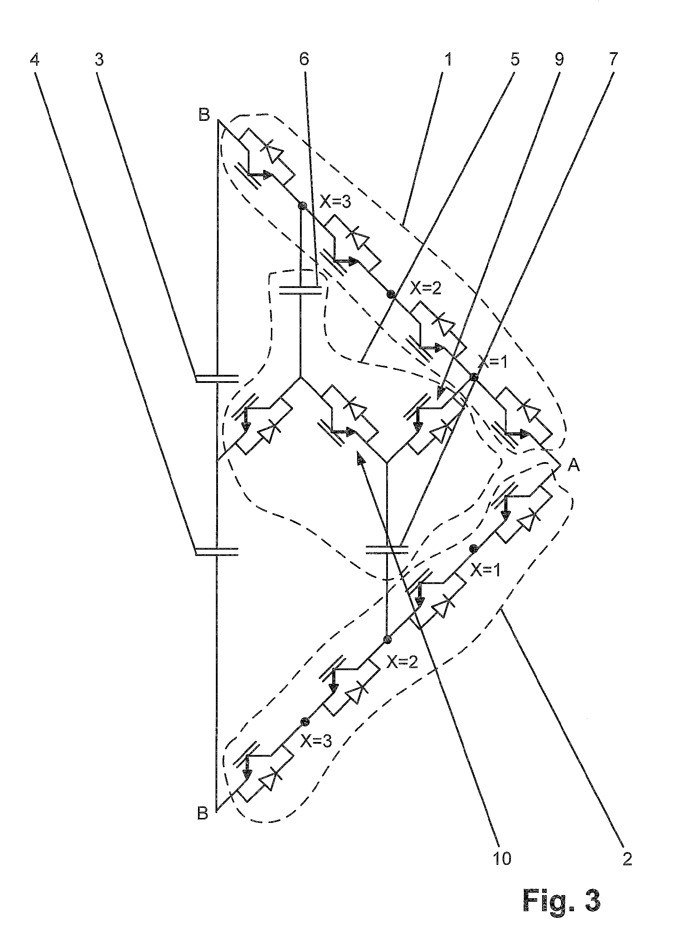

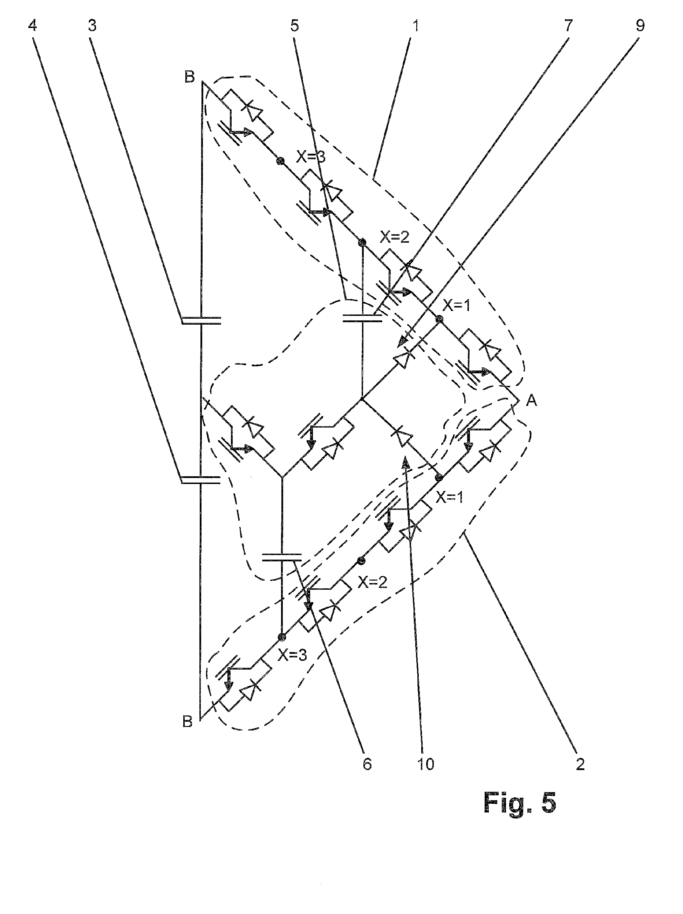

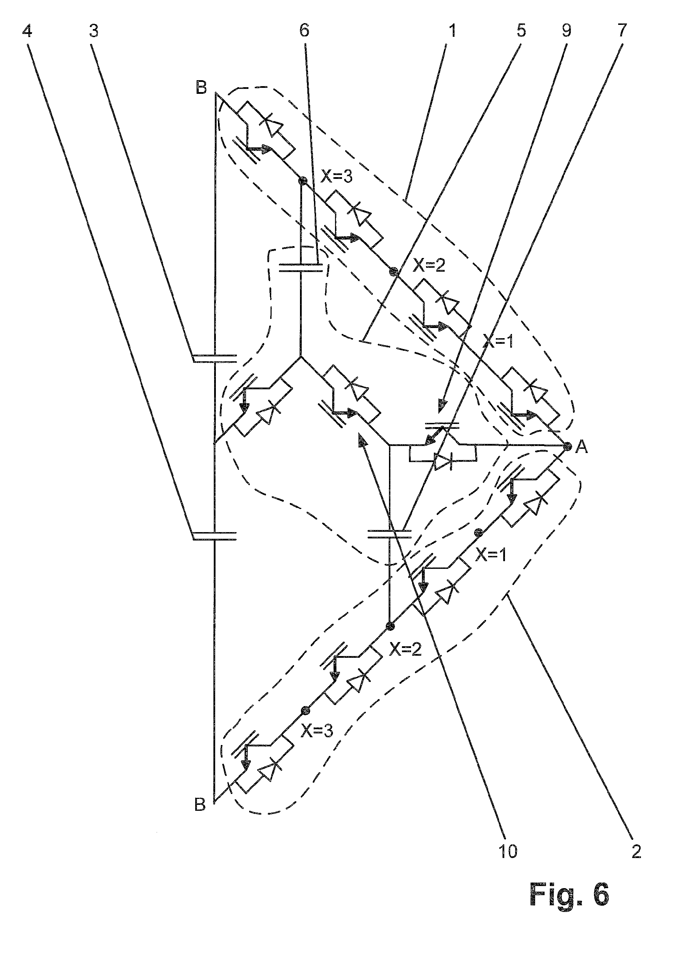

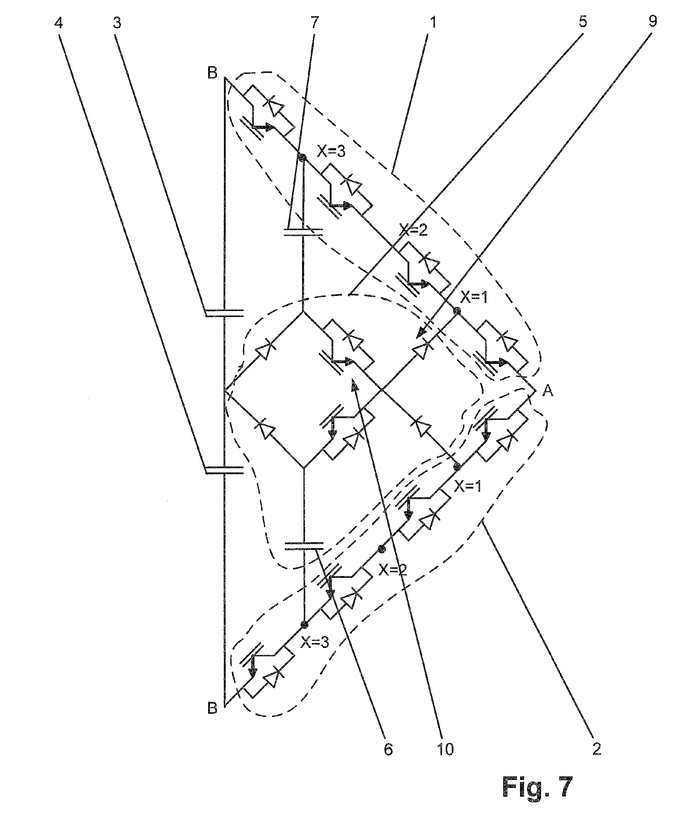

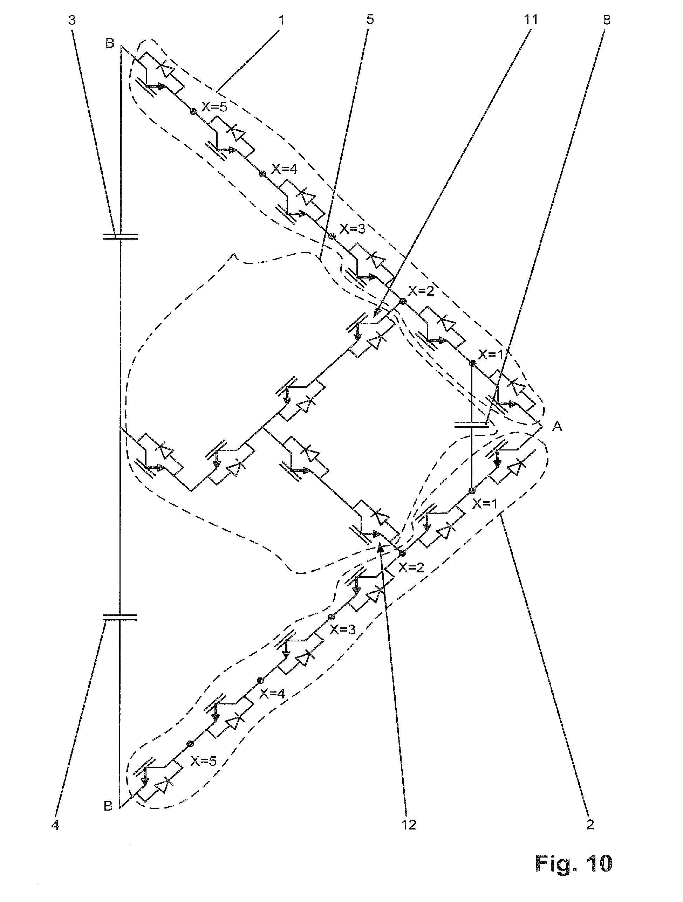

In Fig. 1 ist eine erste Ausführungsform einer erfindungsgemässen Schaltzelle zur Schaltung von n Schaltspannungsniveaus, wobei n=5, 7, 9,... ist, gezeigt. In den Fig. 2 bis Fig. 10 sind weitere Ausführungsformen der erfindungsgemässen Schaltzelle dargestellt. In den Fig. 1 bis Fig. 5 sowie Fig. 7 und Fig. 8 ist die jeweilige Schaltzelle beispielhaft zur Schaltung von n=5 Schaltspannungsniveaus ausgebildet. Hingegen ist in Fig. 6, Fig. 9 und Fig. 10 die jeweilige Schaltzelle beispielhaft zur Schaltung von n=7 Schaltspannungsniveaus ausgeführt. Allgemein umfasst nun jede erfindungsgemässe Schaltzelle eine erste und eine zweite Zweigschaltung 1, 2, wobei jede Zweigschaltung 1, 2 n-1 in Serie geschaltete ansteuerbare bidirektionale Leistungshalbleiterschalter mit gesteuerter unidirektionaler Stromführungsrichtung aufweist. Es versteht sich, dass die Anzahl n Schaltspannungsniveaus mit n=5, 7, 9,... als maximal mögliche Anzahl verstanden wird, so dass auch Schaltspannungsniveaus kleiner als n, beispielsweise vier Schaltspannungsniveaus bei n=5 maximal möglichen Schaltspannungsniveaus, geschaltet werden können. Der jeweilige ansteuerbare bidirektionale Leistungshalbleiterschalter mit gesteuerter unidirektionaler Stromführungsrichtung ist in den Fig. 1 bis Fig. 10 beispielhaft durch einen Bipolartransistor mit isoliert angeordneter Gateelektrode (IGBT) und durch eine zu dem Bipolartransistor antiparallel geschaltete Diode gebildet. Es ist aber auch denkbar einen vorstehend genannten ansteuerbaren bidirektionalen Leistungshalbleiterschalter beispielsweise als Leistungs-MOSFET mit zusätzlich antiparallel geschalteter Diode auszuführen. Denkbar ist es auch, den jeweiligen ansteuerbaren bidirektionalen Leistungshalbleiterschalter mit gesteuerter unidirektionaler Stromführungsrichtung als einen integrierten Thyristor mit kommutierter Ansteuerelektrode (IGCT) und dazu antiparallel geschalteter Diode auszuführen, insbesondere um eine erhöhte Spannung schalten zu können. Ein solcher Thyristor weist besonders geringe Wirkleistungsverluste bei gleichzeitig hoher Robustheit, vor allem bei hohen Spannungen und insbesondere bei Überspannungen, auf. Ferner umfasst allgemein jede Schaltzelle erste Enden A der Zweigschaltungen 1, 2, die miteinander verbunden sind und zweite Enden B der Zweigschaltungen 1, 2, die über eine Serienschaltung eines ersten und eines zweiten Energiespeicher 3, 4 miteinander verbunden sind. Wird die Schaltzelle beispielsweise in einer Umrichterschaltung eingesetzt, bildet die Verbindung der beiden ersten Enden A der Zweigschaltungen 1, 2 einen Wechselspannungsphasenanschluss. Weiterhin sind p=n-2 Leistungshalbleiterschalterverbindungspunkte der in Serie geschalteten ansteuerbaren bidirektionalen Leistungshalbleiterschalter mit gesteuerter unidirektionaler Stromführungsrichtung einer jeden Zweigschaltung 1, 2 vorgesehen, wobei für jede Zweigschaltung die Leistungshalbleiterschalterverbindungspunkte beginnend mit einer ungeraden Zählzahl x vom ersten Ende A bis zum zweiten Ende B der jeweiligen Zweigschaltung 1, 2 gezählt sind. In den Fig. 1 bis Fig. 10 beginnt die ungerade Zählzahl x am ersten Ende A der jeweiligen Zweigschaltung 1, 2 beispielhaft mit x=1 und ist dann ganzzahlig bis zum zweiten Ende B der jeweiligen Zweigschaltung 1, 2 gezählt. Ferner ist allgemein eine Zwischenschaltung 5 vorgesehen, welche mit dem Verbindungspunkt des ersten mit dem zweiten Energiespeicher 3, 4 verbunden ist und welche eine Vielzahl an Leistungshalbleiterschalter aufweist. Nach der Erfindung, insbesondere gemäss Fig. 1 bis Fig. 3, sowie gemäss Fig. 5 bis Fig. 7, weist die Zwischenschaltung 5 nun eine erste und eine zweite Kapazität 6, 7 auf, wobei die erste Kapazität 6 mit einem Leistungshalbleiterschalterverbindungspunkt mit ungerader Zählzahl x der ersten Zweigschaltung 1 verbunden ist und die zweite Kapazität 7 mit einem Leistungshalbleiterschalterverbindungspunkt der zweiten Zweigschaltung 2 verbunden ist. Zudem ist ein Leistungshalbleiterschalter 9 der Zwischenschaltung 5 mit einem Leistungshalbleiterschalterverbindungspunkt mit Zählzahl x < (p+1)/2 der ersten oder zweiten Zweigschaltung 1, 2 oder mit dem ersten Ende A verbunden. Die Verbindung mit dem ersten Ende A ermöglicht eine verbesserte Strom- und Spannungsverteilung über die Schalter und damit eine verbesserte Verteilung der Schalterbelastung.

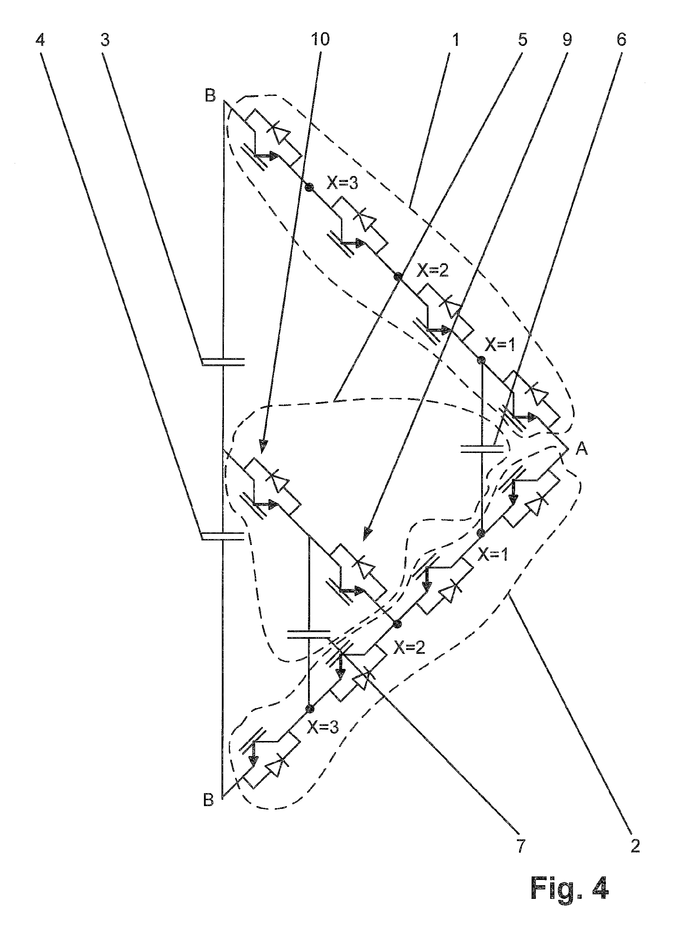

Als Alternative dazu, insbesondere gemäss Fig. 4, ist der Leistungshalbleiterschalter 9 der Zwischenschaltung 5 nach der Erfindung nur mit einem Leistungshalbleiterschalterverbindungspunkt mit Zählzahl x = (p+1)/2 der ersten Zweigschaltung 1 oder nur mit einem Leistungshalbleiterschalterverbindungspunkt mit Zählzahl x = (p+1)/2 der zweiten Zweigschaltung 2 verbunden.

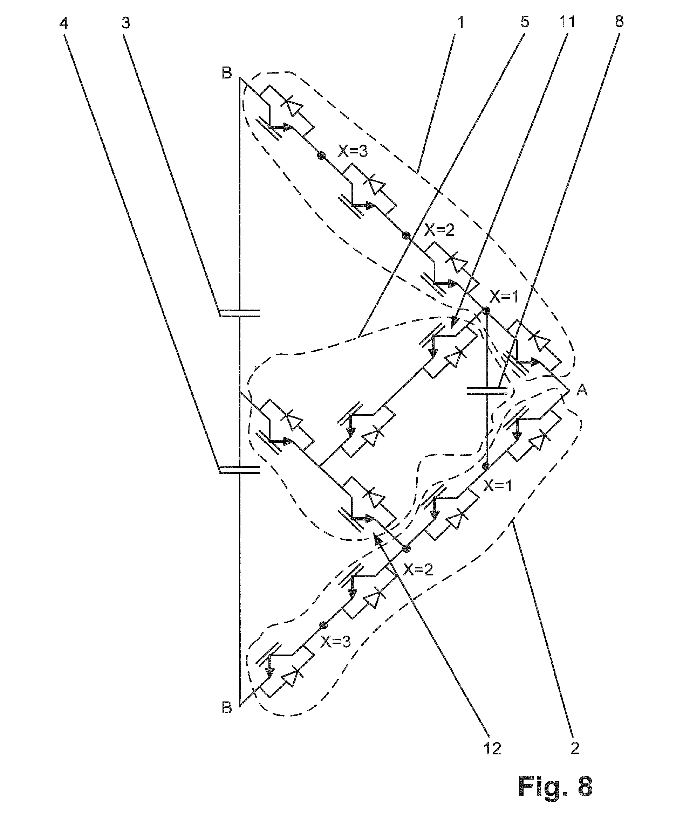

Als weitere Alternative, insbesondere gemäss Fig. 8 bis Fig. 10, weist die Zwischenschaltung 5 erfindungsgemäss eine Kapazität 8 auf, wobei die Kapazität 8 mit einem Leistungshalbleiterschalterverbindungspunkt mit Zählzahl x < (p+1)/2 der ersten und zweiten Zweigschaltung 1, 2 verbunden ist. Ferner ist dann ein Leistungshalbleiterschalter 11 der Zwischenschaltung 5 mit einem Leistungshalbleiterschalterverbindungspunkt mit Zählzahl x < (p+1)/2 der ersten oder zweiten Zweigschaltung 1, 2 verbunden und ein weiterer Leistungshalbleiterschalter 12 der Zwischenschaltung 5 ist mit einem Leistungshalbleiterschalterverbindungspunkt mit Zählzahl x ≤ (p+1)/2 der ersten oder zweiten Zweigschaltung 1, 2 verbunden, wobei der weitere Leistungshalbleiterschalter 12 der Zwischenschaltung 5 dann nicht unmittelbar mit der Kapazität 8 der Zwischenschaltung 8 verbunden ist.

Die Vielzahl der Leistungshalbleiterschalter der Zwischenschaltung 5 können ebenfalls als ansteuerbare bidirektionale Leistungshalbleiterschalter mit gesteuerter unidirektionaler Stromführungsrichtung, wie beispielhaft in Fig. 1 bis Fig. 10 gezeigt, ausgebildet sein oder aber teilweise auch als nicht ansteuerbare unidirektionale Leistungshalbleiterschalter, wie beispielsweise in Fig. 5 dargestellt, ausgeführt sein.

Insgesamt ist somit eine Schaltzelle zur Schaltung von n Schaltspannungsniveaus, wobei n=5, 7, 9,... ist, mit besonders wenigen Bauelementen und diesbezüglichen Verbindungen und somit eine insgesamt besonders einfache Schaltzelle realisierbar, welche zudem einen geringen Platzbedarf aufweist und darüber hinaus eine alternative Lösung zum Stand der Technik darstellt. Durch den geringen Schaltungsaufwand ist die erfindungsgemässe Schaltzelle auch sehr robust, wenig störanfällig und zeichnet sich damit durch eine hohe Verfügbarkeit aus. Aufgrund des geringen Schaltungsaufwandes kann der Ansteueraufwand bezüglich der schaltenden Elemente zudem ebenfalls gering gehalten werden. Ein weiterer Vorteil der erfindungsgemässen Schaltzelle ist, dass sich der Strom am dem Verbindungspunkt des ersten mit dem zweiten Energiespeicher 3, 4 mittels der Zwischenschaltung 5 in bidirektionaler Richtung einstellen beziehungsweise regeln lässt. Die vorstehend genannte erfindungsgemässe alternative Schaltzelle kommt zudem mit lediglich einer Kapazität 8 aus und ist damit denkbar einfach und kostengünstig zu realisieren.

Gemäss Fig. 1 ist der mit einem Leistungshalbleiterschalterverbindungspunkt mit Zählzahl x < (p+1)/2 der ersten oder zweiten Zweigschaltung 1, 2 verbundene Leistungshalbleiterschalter 9 der Zwischenschaltung 5 mit der ersten Kapazität 6 verbunden. Weiterhin erfolgt dann die Verbindung des Leistungshalbleiterschalters 9 der Zwischenschaltung 5 mit der ersten Kapazität 6 an dem Verbindungspunkt der ersten Kapazität 6 mit dem Leistungshalbleiterschalterverbindungspunkt mit Zählzahl x < (p+1)/2 der ersten oder zweiten Zweigschaltung 1, 2.

In den Ausführungsformen nach Fig. 1 bis Fig. 7 ist allgemein ein weiterer Leistungshalbleiterschalter 10 der Zwischenschaltung 5 mit der zweiten Kapazität 7 verbunden.

Ferner ist gemäss Fig. 5 ein weiterer Leistungshalbleiterschalter 10 der Zwischenschaltung 5 mit einem Leistungshalbleiterschalterverbindungspunkt mit Zählzahl x ≤ (p+1)/2 der ersten oder zweiten Zweigschaltung 1, 2 verbunden.

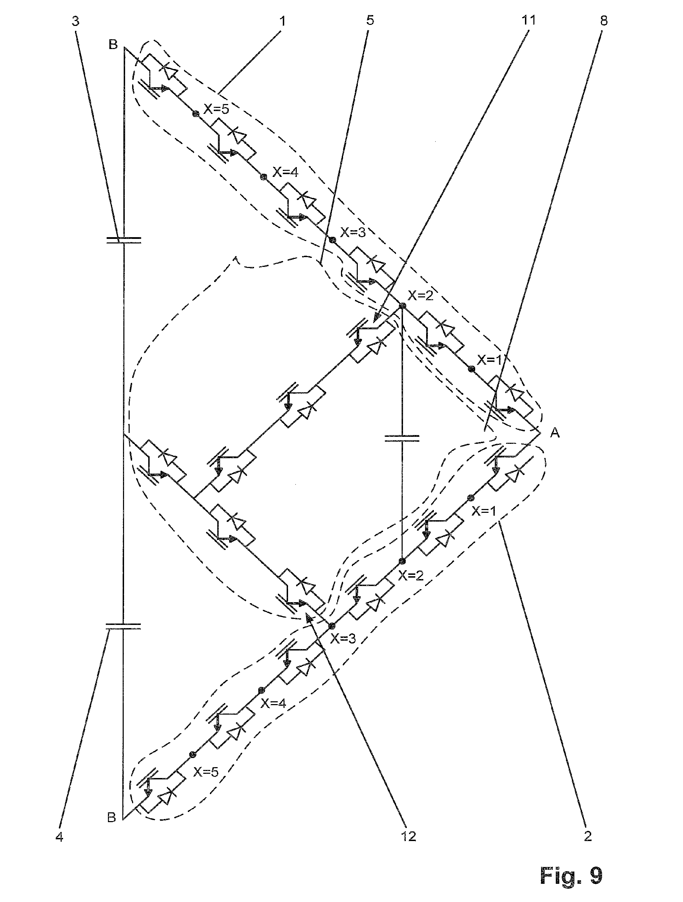

Gemäss der vorstehend detailliert beschriebenen Alternative der erfindungsgemässen Schaltzelle ist nach den Ausführungsformen gemäss Fig. 8 und Fig. 9 der mit einem Leistungshalbleiterschalterverbindungspunkt mit Zählzahl x ≤ (p+1)/2 der ersten oder zweiten Zweigschaltung 1, 2 verbundene Leistungshalbleiterschalter 11 der Zwischenschaltung 5 mit der Kapazität 8 verbunden ist. Die Verbindung des Leistungshalbleiterschalters 11 der Zwischenschaltung 5 mit der Kapazität 8 an dem Verbindungspunkt der Kapazität 8 mit dem Leistungshalbleiterschalterverbindungspunkt mit Zählzahl x < (p+1)/2 der ersten oder zweiten Zweigschaltung 1, 2 erfolgt.

Selbstverständlich steht es dem Fachmann frei, sämtliche Ausführungsformen der erfindungsgemässen Schaltzelle 1 nach Fig. 1 bis Fig. 10 bezüglich der Zwischenschaltung 5 sowie Teile der Zwischenschaltung 5 untereinander zu kombinieren.

### Bezugszeichenliste

- 1: erste Zweigschaltung
- 2: zweite Zweigschaltung
- 3: erster Energiespeicher
- 4: zweiter Energiespeicher
- 5: Zwischenschaltung
- 6: erste Kapazität der Zwischenschaltung
- 7: zweite Kapazität der Zwischenschaltung
- 8: Kapazität der Zwischenschaltung
- 9: Leistungshalbleiterschalter der Zwischenschaltung
- 10: weiterer Leistungshalbleiterschalter der Zwischenschaltung
- 11: Leistungshalbleiterschalter der Zwischenschaltung
- 12: weiterer Leistungshalbleiterschalter der Zwischenschaltung
- A: erste Enden der Zweigschaltungen
- B: zweite Enden der Zweigschaltungen

## Patentansprüche

1. Schaltzelle zur Schaltung von n Schaltspannungsniveaus, wobei n=5, 7, 9,... ist, mit einer ersten und einer zweiten Zweigschaltung (1, 2), wobei jede Zweigschaltung (1, 2) n-1 in Serie geschaltete ansteuerbare bidirektionale Leistungshalbleiterschalter mit gesteuerter unidirektionaler Stromführungsrichtung aufweist, erste Enden (A) der Zweigschaltungen (1, 2) miteinander verbunden sind und zweite Enden (B) der Zweigschaltungen (1, 2) über eine Serienschaltung eines ersten und eines zweiten Energiespeicher (3, 4) miteinander verbunden sind,
mit p=n-2 Leistungshalbleiterschalterverbindungspunkten der in Serie geschalteten ansteuerbaren bidirektionalen Leistungshalbleiterschalter mit gesteuerter unidirektionaler Stromführungsrichtung einer jeden Zweigschaltung (1, 2), wobei für jede Zweigschaltung (1, 2) die Leistungshalbleiterschalterverbindungspunkte beginnend mit einer ungeraden Zählzahl x vom ersten Ende (A) bis zum zweiten Ende (B) der jeweiligen Zweigschaltung (1, 2) gezählt sind,
mit einer Zwischenschaltung (5), welche mit dem Verbindungspunkt des ersten mit dem zweiten Energiespeicher (3, 4) verbunden ist und welche eine Vielzahl an Leistungshalbleiterschalter aufweist,
**dadurch gekennzeichnet,**
**dass** die Zwischenschaltung (5) eine erste und eine zweite Kapazität (6, 7) aufweist, wobei die erste Kapazität (6) mit einem Leistungshalbleiterschalterverbindungspunkt mit ungerader Zählzahl x der ersten Zweigschaltung (1) verbunden ist und die zweite Kapazität (7) mit einem Leistungshalbleiterschalterverbindungspunkt der zweiten Zweigschaltung (2) verbunden ist, und
**dass** ein Leistungshalbleiterschalter (9) der Zwischenschaltung (5) mit einem Leistungshalbleiterschalterverbindungspunkt mit Zählzahl x < (p+1)/2 der ersten oder zweiten Zweigschaltung (1, 2) oder mit dem ersten Ende (A) verbunden ist.

2. Schaltzelle zur Schaltung von n Schaltspannungsniveaus, wobei n=5, 7, 9,... ist, mit einer ersten und einer zweiten Zweigschaltung (1, 2), wobei jede Zweigschaltung (1, 2) n-1 in Serie geschaltete ansteuerbare bidirektionale Leistungshalbleiterschalter mit gesteuerter unidirektionaler Stromführungsrichtung aufweist, erste Enden (A) der Zweigschaltungen (1, 2) miteinander verbunden sind und zweite Enden (B) der Zweigschaltungen (1, 2) über eine Serienschaltung eines ersten und eines zweiten Energiespeicher (3, 4) miteinander verbunden sind,
mit p=n-2 Leistungshalbleiterschalterverbindungspunkten der in Serie geschalteten ansteuerbaren bidirektionalen Leistungshalbleiterschalter mit gesteuerter unidirektionaler Stromführungsrichtung einer jeden Zweigschaltung (1, 2), wobei für jede Zweigschaltung (1, 2) die Leistungshalbleiterschalterverbindungspunkte beginnend mit einer ungeraden Zählzahl x vom ersten Ende (A) bis zum zweiten Ende (B) der jeweiligen Zweigschaltung (1, 2) gezählt sind,
mit einer Zwischenschaltung (5), welche mit dem Verbindungspunkt des ersten mit dem zweiten Energiespeicher (3, 4) verbunden ist und welche eine Vielzahl an Leistungshalbleiterschalter aufweist,
**dadurch gekennzeichnet,**
**dass** die Zwischenschaltung (5) eine Kapazität (8) aufweist, wobei die Kapazität (8) mit einem Leistungshalbleiterschalterverbindungspunkt mit Zählzahl x < (p+1)/2 der ersten und zweiten Zweigschaltung (1, 2) verbunden ist,
**dass** ein Leistungshalbleiterschalter (11) der Zwischenschaltung (5) mit einem Leistungshalbleiterschalterverbindungspunkt mit Zählzahl x < (p+1)/2 der ersten oder zweiten Zweigschaltung (1, 2) verbunden ist, und
**dass** ein weiterer Leistungshalbleiterschalter (12) der Zwischenschaltung (5) mit einem Leistungshalbleiterschalterverbindungspunkt mit Zählzahl x ≤ (p+1)/2 der ersten oder zweiten Zweigschaltung (1, 2) verbunden ist, wobei der weitere Leistungshalbleiterschalter (12) der Zwischenschaltung (5) nicht unmittelbar mit der Kapazität (8) der Zwischenschaltung (5) verbunden ist.

3. Schaltzelle zur Schaltung von n Schaltspannungsniveaus, wobei n=5, 7, 9,... ist, mit einer ersten und einer zweiten Zweigschaltung (1, 2), wobei jede Zweigschaltung (1, 2) n-1 in Serie geschaltete ansteuerbare bidirektionale Leistungshalbleiterschalter mit gesteuerter unidirektionaler Stromführungsrichtung aufweist, erste Enden (A) der Zweigschaltungen (1, 2) miteinander verbunden sind und zweite Enden (B) der Zweigschaltungen (1, 2) über eine Serienschaltung eines ersten und eines zweiten Energiespeicher (3, 4) miteinander verbunden sind,
mit p=n-2 Leistungshalbleiterschalterverbindungspunkten der in Serie geschalteten ansteuerbaren bidirektionalen Leistungshalbleiterschalter mit gesteuerter unidirektionaler Stromführungsrichtung einer jeden Zweigschaltung (1, 2), wobei für jede Zweigschaltung (1, 2) die Leistungshalbleiterschalterverbindungspunkte beginnend mit einer ungeraden Zählzahl x vom ersten Ende (A) bis zum zweiten Ende (B) der jeweiligen Zweigschaltung (1, 2) gezählt sind,
mit einer Zwischenschaltung (5), welche mit dem Verbindungspunkt des ersten mit dem zweiten Energiespeicher (3, 4) verbunden ist und welche eine Vielzahl an Leistungshalbleiterschalter aufweist,
**dadurch gekennzeichnet,**
**dass** die Zwischenschaltung (5) eine erste und eine zweite Kapazität (6, 7) aufweist, wobei die erste Kapazität (6) mit einem Leistungshalbleiterschalterverbindungspunkt mit ungerader Zählzahl x der ersten Zweigschaltung (1) verbunden ist und die zweite Kapazität (7) mit einem Leistungshalbleiterschalterverbindungspunkt der zweiten Zweigschaltung (2) verbunden ist, und
**dass** ein Leistungshalbleiterschalter (9) der Zwischenschaltung (5) nur mit einem Leistungshalbleiterschalterverbindungspunkt mit Zählzahl x = (p+1)/2 der ersten Zweigschaltung (1) oder nur mit einem Leistungshalbleiterschalterverbindungspunkt mit Zählzahl x = (p+1)/2 der zweiten Zweigschaltung (2) verbunden ist.

4. Schaltzelle nach Anspruch 1, **dadurch gekennzeichnet, dass** der mit einem Leistungshalbleiterschalterverbindungspunkt mit Zählzahl x < (p+1)/2 der ersten oder zweiten Zweigschaltung (1, 2) verbundene Leistungshalbleiterschalter (9) der Zwischenschaltung (5) mit der ersten Kapazität (6) verbunden ist.

5. Schaltzelle nach Anspruch 4, **dadurch gekennzeichnet, dass** die Verbindung des Leistungshalbleiterschalters (9) der Zwischenschaltung (5) mit der ersten Kapazität (6) an dem Verbindungspunkt der ersten Kapazität (6) mit dem Leistungshalbleiterschalterverbindungspunkt mit Zählzahl x < p/2 der ersten oder zweiten Zweigschaltung (1, 2) erfolgt.

6. Schaltzelle nach einem der Ansprüche 1, 3, 4 oder 5, **dadurch gekennzeichnet, dass** ein weiterer Leistungshalbleiterschalter (10) der Zwischenschaltung (5) mit der zweiten Kapazität (7) verbunden ist.

7. Schaltzelle nach Anspruch 1, **dadurch gekennzeichnet, dass** ein weiterer Leistungshalbleiterschalter (10) der Zwischenschaltung (5) mit einem Leistungshalbleiterschalterverbindungspunkt mit Zählzahl x ≤ (p+1)/2 der ersten oder zweiten Zweigschaltung (1, 2) verbunden ist.

8. Schaltzelle nach Anspruch 2, **dadurch gekennzeichnet, dass** der mit einem Leistungshalbleiterschalterverbindungspunkt mit Zählzahl x ≤ (p+1)/2 der ersten oder zweiten Zweigschaltung (1, 2) verbundene Leistungshalbleiterschalter (11) der Zwischenschaltung (5) mit der Kapazität (8) verbunden ist.

9. Schaltzelle nach Anspruch 8, **dadurch gekennzeichnet, dass** die Verbindung des Leistungshalbleiterschalters (11) der Zwischenschaltung (5) mit der Kapazität (8) an dem Verbindungspunkt der Kapazität (8) mit dem Leistungshalbleiterschalterverbindungspunkt mit Zählzahl x < (p+1)/2 der ersten oder zweiten Zweigschaltung (1, 2) erfolgt.

## Geänderte Patentansprüche

### Geänderte Patentansprüche gemäss Regel 137(2) EPÜ.

**1.** Schaltzelle zur Schaltung von n Schaltspannungsniveaus, wobei n=5, 7, 9,... ist, mit einer ersten und einer zweiten Zweigschaltung (1, 2), wobei jede Zweigschaltung (1, 2) n-1 in Serie geschaltete ansteuerbare bidirektionale Leistungshalbleiterschalter mit gesteuerter unidirektionaler Stromführungsrichtung aufweist, erste Enden (A) der Zweigschaltungen (1, 2) miteinander verbunden sind und zweite Enden (B) der Zweigschaltungen (1, 2) über eine Serienschaltung eines ersten und eines zweiten Energiespeicher (3, 4) miteinander verbunden sind,
mit p=n-2 Leistungshalbleiterschalterverbindungspunkten der in Serie geschalteten ansteuerbaren bidirektionalen Leistungshalbleiterschalter mit gesteuerter unidirektionaler Stromführungsrichtung einer jeden Zweigschaltung (1, 2), wobei für jede Zweigschaltung (1, 2) die Leistungshalbleiterschalterverbindungspunkte beginnend mit einer ungeraden Zählzahl x vom ersten Ende (A) bis zum zweiten Ende (B) der jeweiligen Zweigschaltung (1, 2) gezählt sind,
mit einer Zwischenschaltung (5), welche mit dem Verbindungspunkt des ersten mit dem zweiten Energiespeicher (3, 4) verbunden ist und welche eine Vielzahl an Leistungshalbleiterschalter aufweist,
**dadurch gekennzeichnet,**
**dass** die Zwischenschaltung (5) eine erste und eine zweite Kapazität (6, 7) aufweist, wobei die erste Kapazität (6) mit einem Leistungshalbleiterschalterverbindungspunkt mit ungerader Zählzahl x der ersten Zweigschaltung (1) verbunden ist und die zweite Kapazität (7) mit einem Leistungshalbleiterschalterverbindungspunkt der zweiten Zweigschaltung (2) verbunden ist, und
**dass** ein Leistungshalbleiterschalter (9) der Zwischenschaltung (5) mit einem Leistungshalbleiterschalterverbindungspunkt mit Zählzahl x < (p+1)/2 der ersten oder zweiten Zweigschaltung (1, 2) oder mit dem ersten Ende (A) unmittelbar verbunden ist.

**2.** Schaltzelle zur Schaltung von n Schaltspannungsniveaus, wobei n=5, 7, 9,... ist, mit einer ersten und einer zweiten Zweigschaltung (1, 2), wobei jede Zweigschaltung (1, 2) n-1 in Serie geschaltete ansteuerbare bidirektionale Leistungshalbleiterschalter mit gesteuerter unidirektionaler Stromführungsrichtung aufweist, erste Enden (A) der Zweigschaltungen (1, 2) miteinander verbunden sind und zweite Enden (B) der Zweigschaltungen (1, 2) über eine Serienschaltung eines ersten und eines zweiten Energiespeicher (3, 4) miteinander verbunden sind,
mit p=n-2 Leistungshalbleiterschalterverbindungspunkten der in Serie geschalteten ansteuerbaren bidirektionalen Leistungshalbleiterschalter mit gesteuerter unidirektionaler Stromführungsrichtung einer jeden Zweigschaltung (1, 2), wobei für jede Zweigschaltung (1, 2) die Leistungshalbleiterschalterverbindungspunkte beginnend mit einer ungeraden Zählzahl x vom ersten Ende (A) bis zum zweiten Ende (B) der jeweiligen Zweigschaltung (1, 2) gezählt sind,
mit einer Zwischenschaltung (5), welche mit dem Verbindungspunkt des ersten mit dem zweiten Energiespeicher (3, 4) verbunden ist und welche eine Vielzahl an Leistungshalbleiterschalter aufweist,
**dadurch gekennzeichnet,**
**dass** die Zwischenschaltung (5) eine Kapazität (8) aufweist, wobei die Kapazität (8) mit einem Leistungshalbleiterschalterverbindungspunkt mit Zählzahl x < (p+1)/2 der ersten und zweiten Zweigschaltung (1, 2) verbunden ist,
**dass** ein Leistungshalbleiterschalter (11) der Zwischenschaltung (5) mit einem Leistungshalbleiterschalterverbindungspunkt mit Zählzahl x < (p+1)/2 der ersten oder zweiten Zweigschaltung (1, 2) verbunden ist, und
**dass** ein weiterer Leistungshalbleiterschalter (12) der Zwischenschaltung (5) mit einem Leistungshalbleiterschalterverbindungspunkt mit Zählzahl x ≤ (p+1)/2 der ersten oder zweiten Zweigschaltung (1, 2) unmittelbar verbunden ist, wobei der weitere Leistungshalbleiterschalter (12) der Zwischenschaltung (5) nicht unmittelbar mit der Kapazität (8) der Zwischenschaltung (5) verbunden ist.

**3.** Schaltzelle zur Schaltung von n Schaltspannungsniveaus, wobei n=5, 7, 9,... ist, mit einer ersten und einer zweiten Zweigschaltung (1, 2), wobei jede Zweigschaltung (1, 2) n-1 in Serie geschaltete ansteuerbare bidirektionale Leistungshalbleiterschalter mit gesteuerter unidirektionaler Stromführungsrichtung aufweist, erste Enden (A) der Zweigschaltungen (1, 2) miteinander verbunden sind und zweite Enden (B) der Zweigschaltungen (1, 2) über eine Serienschaltung eines ersten und eines zweiten Energiespeicher (3, 4) miteinander verbunden sind,
mit p=n-2 Leistungshalbleiterschalterverbindungspunkten der in Serie geschalteten ansteuerbaren bidirektionalen Leistungshalbleiterschalter mit gesteuerter unidirektionaler Stromführungsrichtung einer jeden Zweigschaltung (1, 2), wobei für jede Zweigschaltung (1, 2) die Leistungshalbleiterschalterverbindungspunkte beginnend mit einer ungeraden Zählzahl x vom ersten Ende (A) bis zum zweiten Ende (B) der jeweiligen Zweigschaltung (1, 2) gezählt sind,
mit einer Zwischenschaltung (5), welche mit dem Verbindungspunkt des ersten mit dem zweiten Energiespeicher (3, 4) verbunden ist und welche eine Vielzahl an Leistungshalbleiterschalter aufweist,
**dadurch gekennzeichnet,**
**dass** die Zwischenschaltung (5) eine erste und eine zweite Kapazität (6, 7) aufweist, wobei die erste Kapazität (6) mit einem Leistungshalbleiterschalterverbindungspunkt mit ungerader Zählzahl x der ersten Zweigschaltung (1) verbunden ist und die zweite Kapazität (7) mit einem Leistungshalbleiterschalterverbindungspunkt der zweiten Zweigschaltung (2) verbunden ist, und
**dass** ein Leistungshalbleiterschalter (9) der Zwischenschaltung (5) nur mit einem Leistungshalbleiterschalterverbindungspunkt mit Zählzahl x = (p+1)/2 der ersten Zweigschaltung (1) oder nur mit einem Leistungshalbleiterschalterverbindungspunkt mit Zählzahl x = (p+1)/2 der zweiten Zweigschaltung (2) verbunden ist.

**4.** Schaltzelle nach Anspruch 1, **dadurch gekennzeichnet, dass** der mit einem Leistungshalbleiterschalterverbindungspunkt mit Zählzahl x < (p+1)/2 der ersten oder zweiten Zweigschaltung (1, 2) verbundene Leistungshalbleiterschalter (9) der Zwischenschaltung (5) mit der ersten Kapazität (6) verbunden ist.

**5.** Schaltzelle nach Anspruch 4, **dadurch gekennzeichnet, dass** die Verbindung des Leistungshalbleiterschalters (9) der Zwischenschaltung (5) mit der ersten Kapazität (6) an dem Verbindungspunkt der ersten Kapazität (6) mit dem Leistungshalbleiterschalterverbindungspunkt mit Zählzahl x < (p+1)/2 der ersten oder zweiten Zweigschaltung (1, 2) erfolgt.

**6.** Schaltzelle nach einem der Ansprüche 1, 3, 4 oder 5, **dadurch gekennzeichnet, dass** ein weiterer Leistungshalbleiterschalter (10) der Zwischenschaltung (5) mit der zweiten Kapazität (7) verbunden ist.

**7.** Schaltzelle nach Anspruch 1, **dadurch gekennzeichnet, dass** ein weiterer Leistungshalbleiterschalter (10) der Zwischenschaltung (5) mit einem Leistungshalbleiterschalterverbindungspunkt mit Zählzahl x ≤ (p+1)/2 der ersten oder zweiten Zweigschaltung (1, 2) verbunden ist.

**8.** Schaltzelle nach Anspruch 2, **dadurch gekennzeichnet, dass** der mit einem Leistungshalbleiterschalterverbindungspunkt mit Zählzahl x ≤ (p+1)/2 der ersten oder zweiten Zweigschaltung (1, 2) verbundene Leistungshalbleiterschalter (11) der Zwischenschaltung (5) mit der Kapazität (8) verbunden ist.

**9.** Schaltzelle nach Anspruch 8, **dadurch gekennzeichnet, dass** die Verbindung des Leistungshalbleiterschalters (11) der Zwischenschaltung (5) mit der Kapazität (8) an dem Verbindungspunkt der Kapazität (8) mit dem Leistungshalbleiterschalterverbindungspunkt mit Zählzahl x < (p+1)/2 der ersten oder zweiten Zweigschaltung (1, 2) erfolgt.
